Europäisches Patentamt

European Patent Office

Office européen des brevets

(11) Veröffentlichungsnummer: **0 176 626**
**A2**

(12) # EUROPÄISCHE PATENTANMELDUNG

(21) Anmeldenummer: **84115532.8**

(51) Int. Cl.⁴: **F 16 J 15/36**

(22) Anmeldetag: **15.12.84**

(30) Priorität: **04.10.84 DE 3436396**

(43) Veröffentlichungstag der Anmeldung:
**09.04.86 Patentblatt 86/15**

(84) Benannte Vertragsstaaten:
**DE FR GB IT NL SE**

(71) Anmelder: **GOETZE AG**
**Bürgermeister-Schmidt-Strasse 17**
**D-5093 Burscheid 1(DE)**

(72) Erfinder: **vom Stein, Karl, Ing.**
**Am Sportfeld 15**
**D-5093 Burscheid(DE)**

(72) Erfinder: **Vossieck, Paul**
**Dürscheid 4**
**D-5093 Burscheid(DE)**

(54) **Gleitringdichtung.**

(57) Dreiteilige Gleitringdichtung, insbesondere zum Abdichten von unter Druck stehenden Medien, bestehend aus einem Gleitring, einem mit diesem zusammenwirkenden Balgen, der außerhalb des Gleitringes in einen Haftteil ausläuft sowie einer sich zwischen Haftteil und Gleitring erstreckenden von dem Balgen umschlossenen kegelförmigen Druckfeder mit rechteckigem Drahtquerschnitt, wobei die einzelnen Federwindungen im Einbauzustand der Gleitringdichtung nahezu spaltfrei aneinanderleigen und somit unter Druckeinwirkung eine stabile Stützfläche für den Balgen bilden.

EP 0 176 626 A2

## Gleitringdichtung.

Die Erfindung betrifft eine Gleitringdichtung zur Abdichtung von insbesondere unter Druck stehenden Medien, bestehend aus einem Gleitring, einem Balgen, dessen eines axiales Ende mit dem Gleitring verbunden und dessen anderes axiales Ende als Haftteil ausgebildet ist sowie einer konzentrisch zwischen Haftteil und Gleitring angeordneten kegelförmigen Druckfeder mit rechteckigem Drahtquerschnitt.

Durch die DE-OS 32 22 579 ist eine Gleitringdichtung bekannt, die aus drei Teilen besteht, nämlich einem Gleitring, einem mit diesem zusammenwirkenden Balgen, der in einem mit einem Maschinenteil verbindbaren Haftteil ausläuft sowie einer gegebenenfalls einen rechteckigen oder quadratischen Drahtquerschnitt aufweisenden kegelförmigen Druckfeder, die sich axial zwischen Haftteil und Gleitring erstreckt. Diese Art von Gleitringdichtung weist gute Dichtwirkungen in unteren Druckbereichen (bis etwa 1 bar) auf. Würde diese Dichtung druckbelastet werden, so würde sich der Balgen radial in die beabstandeten Federwindungen hineinquetschen und die Dichtung somit unwirksam werden.

Ferner ist durch die US-PS 2.440.394 eine Gleitringdichtung bekannt, die aus einem Gleitring aus selbstschmierendem Werkstoff, einem axial dahinter angeordneten, gegebenenfalls mit dem Gleitring verbindbaren Elastomerkörper sowie einer kegelförmigen, sich zwischen der dem Gleitring abgewandten Stirnfläche des Elastomerkörpers und einem auf der Welle angeordneten Stützkörper erstreckenden Druckfeder besteht. Die Federwindungen weisen einen rechteckigen Drahtquerschnitt auf. Sie sind mit radialem Abstand zueinander, einander in axialer Richtung überlappend, gewickelt. Durch diese Maßnahme soll, wie schon vorab beschrieben, unter geringen Druckverhältnissen zum einen die axiale Anpreßkraft des Gleitringes an den Gegenring sichergestellt und zum anderen die Schmutzablagerung radial zwischen Feder und Balgen reduziert werden. Ein derartiges System ist unter Druckeinwirkung ebenfalls nicht einsetzbar. Das unter Druck stehende Medium würde die Federwindungen axial in Richtung auf den Balgen verschieben und somit die Anpreßkraft des Gleitringes an den Gegenring aufheben.

Der Erfindung liegt somit die Aufgabe zugrunde, eine Gleitringdichtung zu konzipieren, die aus wenigen Teilen bestehend, insbesondere zur Abdichtung von unter Druck stehenden Medien, bevorzugt für die lebensmittelverarbeitende Industrie geeignet und je nach Anwendungsfall hydraulisch be- oder entlastbar sein soll.

Diese Aufgabe wird erfindungsgemäß dadurch gelöst, daß die Federwindungen im Einbauzustand der Gleitringdichtung nahezu spaltfrei aneinanderliegen und daß der Balgen etwa der kegelförmigen Federkontur folgend, sich auf der dem Druckmedium zugewandten Seite der Feder erstreckt. Durch diese Maßnahme ist sichergestellt, daß sich zum einen der Balgen bei Druckbeaufschlagung nicht radial oder axial in

- 3 -

die Federwindungen hineinquetschen kann (da kein oder nahezu kein Spalt mehr vorhanden ist) und zum anderen bei Anlage des Balgen an der Feder durch das Druckmedium eine zusätzliche Axialkomponente auf die Feder ausgeübt wird. Durch Abstimmung der durch die Feder auf den Gleitring ausgeübten Axialkraft mit dem im abzudichtenden System auftretenden Maximaldruck kann eine Gleitringdichtung geschaffen werden, die in jeder Betriebssituation mit definierter Kraft an der korrespondierenden Gegenfläche dichtend anliegt.

Einzelmerkmale des Erfindungsgedankens sind zwar dem angesprochenen Stand der Technik zu entnehmen, die jedoch dem Fachmann auch in der Zusammenschau keinen Hinweis geben, wie er das anstehende Abdichtungsproblem lösen kann.

Eine bevorzugte Ausführungsform der Erfindung ist darin zu sehen, daß sich die einzelnen Federwindungen mit geringstmöglichem Radialspiel einander in axialer Richtung überlappen. Somit wird eine Spiralfeder mit in sich geschlossener treppenförmiger Kegelfläche gebildet, wobei die Eckpunkte der ineinanderliegenden Federwindungen alle auf einer gedachten, unter einem definierten Neigungswinkel verlaufenden, Hüllkurve liegen.

Vorzugsweise umgibt der Balgen die Feder konzentrisch mit definiertem Abstand. Unter Druckeinwirkung wird der Dichtbalgen elastisch so weit verformt, bis der parallele Abstand zu der von der Feder gebildeten, geschlossenen

- 4 -

Kegelfläche überbrückt ist. Die Feder wirkt dann als stabiles Stützelement und verhindert eine Zerstörung des Balgens infolge der Druckeinwirkung.

Je nach Druckverhältnis im Betriebszustand kann es sinnvoll sein, zumindest die mit dem Balgen unmittelbar zusammenwirkenden Ecken der einzelnen Federwindungen abgerundet auszubilden. Dies kann in einfachster Weise durch Verwendung eines entsprechend ausgebildeten Drahtmateriales erzielt werden. Eine Nacharbeitung der Feder ist natürlich auch denkbar, für die Massenfertigung jedoch problembehaftet.

Einem weiteren Gedanken der Erfindung gemäß bestehen die axialen Enden der an sich konischen Feder aus jeweils mehreren zylindrisch gewickelten Federwindungen, die vorzugsweise mit axialer Vorspannung aneinandergewickelt sind. Durch diese Maßnahme werden in diesen Bereichen stabile Führungen für den Gleitring und das Haftteil gebildet, auf die sich auch ein unter Druck stehendes Medium nicht negativ, im Hinblick auf eine eventuelle Verformung, auswirken kann.

Um ein in sich geschlossenes System zu erhalten, welches, insbesondere für die lebensmittelverarbeitende Industrie, auf der produktzugewandten Seite weitestgehend glattflächig und möglichst ohne Hinterschneidungen ausgeführt sein soll, wird weiterhin vorgeschlagen, daß die zylindrischen Endbereiche der Feder von den Balgenenden zumindest teilweise umschlossen sind. Aus form- und montagetechnischen Gründen können die mit einer Welle oder einem Gehäuse zusammenwirkenden axial verlaufenden Bereiche des Balgens nur relativ kurz ausgebildet sein. Sie sind jedoch axial so lang ausgebildet, daß die zylindrisch gewickelten Endbereiche der Feder dem jeweiligen Balgenende noch eine genügend große radiale, in Richtung der Welle beziehungsweise des Gehäuses wirkende, Vorspannung erteilen.

Wie schon vorab angesprochen, soll die Gleitringdichtung hydraulisch be- und entlastbar sein. Gemäß DIN 24960 geschieht dies überlicherweise bei abgesetzten Wellen dergestalt, daß der Gleitring auf den Wellenabsatz aufgezogen und die eigentliche Gleitfläche auf einen geringeren Durchmesser angeordnet ist. Druckentlastbare beziehungsweise druckbelastbare Gleitringdichtungen unter Verwendung elastischer Balgen sind durch diese Norm nicht abgedeckt und auch nicht daraus herleitbar.

Es wird daher bei einer Gleitringdichtung zur Anordnung auf einem Wellenstumpf mit einer axialen Anschlagfläche vorgeschlagen, daß der Außendurchmesser des mit der Welle zusammenwirkenden Balgenbereiches (Haftteil) etwa dem Innendurchmesser der Gleitringlauffläche entspricht. Bei der vorliegenden Konstruktion wird das hydraulische Belastungsverhältnis bestimmt vom Außendurchmesser des Balgens im Bereich des Haftteiles und von der Lage der Gleitfläche mit ihrem Innen- und Außendurchmesser. Korrespondiert der Außendurchmesser des Balgens mit dem Innendurchmesser der Gleitfläche, so ist das Belastungs-

- 6 -

verhältnis gleich 1. Werden sowohl der Außen- als auch der Innendurchmesser der Gleitfläche verringert, so wird das Belastungsverhältnis kleiner als 1. In Abhängigkeit der Werkstoffpaarung (Gleitring/Gegenring), der Gleitgeschwindigkeit sowie des hydraulischen Belastungsverhältnisses, kann eine Gleitringdichtung mit Balgen immer optimal gemäß den vorstehenden Maßgaben ausgelegt werden.

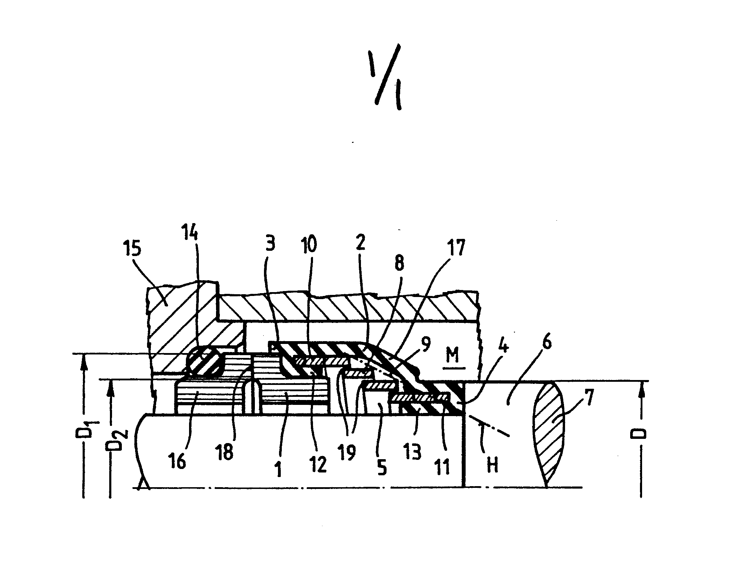

Die Erfindung ist in der Zeichnung dargestellt und wird im folgenden näher beschrieben:

Die Gleitringdichtung besteht aus einem Gleitring 1, einem Balgen 2, dessen eines axiales Ende 3 mit dem Gleitring 1 verbunden und dessen anderes axiales Ende 4 als Haftteil ausgebildet ist sowie einer konzentrisch zwischen Haftteil 4 und Gleitring 1 angeordneten, im wesentlichen kegelförmigen Druckfeder 5 mit rechteckigem Drahtquerschnitt. Die Gleitringdichtung wirkt mit einer einen Absatz 6 aufweisenden Welle 7 dergestalt zusammen, daß sich das Haftteil 4 axial am Absatz 6 abstützt. Die Gleitringdichtung soll z.B. in Geräten der lebensmittelverarbeitenden Industrie eingesetzt werden und einen Systemdruck von ca. 30 bar aufnehmen können. Üblicherweise kommen für derartige Anwendungsfälle in sich geschlossene, im wesentlichen aus Metall bestehende Gleitringdichtungen zur Anwendung, die jedoch aufgrund besserer Werkstoffe (Hygiene) sowie einer Vielzahl von Bauteilen relativ teuer in der Herstellung sind. Alternativ dazu wird nun eine Gleitringdichtung vorgeschlagen, bei der die Federwindungen 8 im Einbauzustand der Gleitringdichtung nahezu spaltfrei, einander in axialer Richtung überlappend, ineinanderliegen. Der Balgen 2 verläuft im kegelförmigen Bereich der Feder 5 etwa parallel mit radialem Abstand 9 zur Hüllkurve H der Feder 5, und zwar auf der dem Druckraum M zugewandten Seite der Feder 5. In ihren axialen Endbereichen 10,11 ist die Feder 5 unter axialer Vorspannung zylindrisch gewickelt. Zur Vermeidung von Beschädigungen während des Betriebszustandes unter hohem Druck sind die Ecken 19 des Drahtmateriales abgerundet. Zur Bildung eines in sich geschlossenen Systemes sind die Endbereiche 10,11 der Feder 5 von den Balgenenden 12,13 umschlossen, wobei die zylindrischen Bereiche 10,11 sowohl eine radiale Vorspannung in Richtung Welle 7 das auch in Richtung Gleitring 1 bewirken. Die Gleitringdichtung wirkt mit einem stillstehenden über einen O-Ring 14 mit einem Gehäuse 15 verbundenen Gegenring 16 zusammen. Aus Kostengründen sind Gleitring 1 und Gegenring 16 gleichartig ausgebildet.

Unter Druckeinwirkung wird der etwa parallel zur Hüllkurve H verlaufende Bereich 17 des Balgens 2 in Richtung der Feder 5 elastisch verformt und kann bei maximal auftretenden Drücken an der Feder 5 zur Anlage kommen. Ist dies der Fall, kann sich der Balgenbereich 17, bedingt durch die Wickelform der Feder 5, nicht zwischen die einzelnen Windungen 8 quetschen. Vielmehr dient die Feder 5 dann zusätzlich als stabiles Stützelement und verhindert so eine Zerstörung des Balgens 2 infolge äußerer Druckeinwirkung.

- 8 -

Zwecks optimaler Auslegung einer solchen Balgenkonstruktion im Hinblick auf Leckverluste, Reibungsverluste, Lebensdauer und Sicherheit müssen eine Reihe von Parametern berücksichtigt werden. Die wesentlichen sind das hydraulische Belastungsverhältnis, die Gleitgeschwindigkeit, die Spaltform im Bereich der Gleitflächen oder die Werkstoffpaarung (Gleitring/Gegenring). Um nun eine derartige Gleitringdichtung zu konzipieren, die - je nach Anwendungsfall - hydraulisch be- oder entlastbar sein soll, sind folgende Angaben gemacht:

Das hydraulische Belastungsverhältnis wird bestimmt vom Durchmesser D des Balgens 2 und von der Lage der Gleitflächen 18 mit ihrem Außendurchmessern D1 und ihrem Innendurchmesser D2. Korrespondiert D mit D2 ist das hydraulische Belastungsverhältnis gleich 1. Wird D2 (D1) im Durchmesser verringert, sinkt das Belastungsverhältnis unter den Wert 1 beziehungsweise wird größer als 1, wenn D1 und D2 im Durchmesser vergrößert werden. In Anlehnung an die einzelnen Parameter kann somit eine Gleitringdichtung konzipiert werden, die hydraulisch be- oder entlastbar ist.

0176626

- 1 -

Patentansprüche:

1. Gleitringdichtung zur Abdichtung von insbesondere unter Druck stehenden Medien, bestehend aus einem Gleitring, einem Balgen, dessen eines axiales Ende mit dem Gleitring verbunden und dessen anderes axiales Ende als Haftteil ausgebildet ist sowie einer konzentrisch zwischen Haftteil und Gleitring angeordneten kegelförmigen Druckfeder mit rechteckigem Drahtquerschnitt, dadurch gekennzeichnet, daß die Federwindungen (8) im Einbauzustand der Gleitringdichtung nahezu spaltfrei aneinanderliegen und daß der Balgen (17) etwa der kegelförmigen Federkontur (H) folgend, sich auf der dem Druckmedium (M) zugewandten Seite der Feder (5) erstreckt.

2. Gleitringdichtung nach Anspruch 1, dadurch gekennzeichnet, daß die einzelnen Federwindungen (8) einander überlappen.

3. Gleitringdichtung nach den Ansprüchen 1 und 2, dadurch gekennzeichnet, daß der Balgen (17) die Feder (5) mit definiertem Abstand umgibt.

4. Gleitringdichtung nach den Ansprüchgen 1 bis 3, dadurch gekennzeichnet, daß zumindest die dem Balgen (17) zugewandten Windungen (8) der Feder (5) im Bereich ihrer Ecken (19) abgerundet sind.

5. Gleitringdichtung nach den Ansprüchen 1 bis 4, dadurch gekennzeichnet, daß die axialen Enden (10,11) der an sich konischen Feder (5) aus jeweils mehreren zylindrisch gewickelten Federwindungen bestehen.

6. Gleitringdichtung nach den Ansprüchen 1 bis 5, dadurch gekennzeichnet, daß die Windungen (8) der Feder (5) im Bereich ihrer axialen Enden (10,11) mit axialer Vorspannung aneinandergewickelt sind.

7. Gleitringdichtung nach den Ansprüchen 1 bis 6, dadurch gekennzeichnet, daß die zylindrischen Endbereiche (10,11) der Feder (5) von den Balgenenden (12,13) zumindest teilweise umschlossen sind.

8. Gleitringdichtung nach den Ansprüchen 1 bis 7, dadurch gekennzeichnet, daß die zylindrischen Endbereiche (10,11) der Feder (5) im Einbauzustand mit radialer Vorspannung auf die Balgenenden (12,13) einwirken.

9. Gleitringdichtung zur Anordnung auf einem Wellenstumpf mit einer axialen Anschlagfläche nach den Ansprüchen 1 bis 8, dadurch gekennzeichnet, daß der Außendurchmesser (D) des mit der Welle zusammenwirkenden Balgenbereiches (4) etwa dem Innendurchmesser (D2) der Gleitringlauffläche (18) entspricht.